# EUROPEAN PATENT APPLICATION

(11) **EP 4 775 474 A1**
(43) Date of publication of application: **15.07.2026**
(21) Application number: 23951530.7
(22) Date of filing: 07.09.2023
(51) Int. Cl.: B62D 6/00

(54) **STEERING CONTROL DEVICE, STEERING CONTROL SYSTEM, AND STEERING CONTROL METHOD**

(71) Applicant: JTEKT CORPORATION, Kariya-shi, Aichi 448-8652 (JP)
(72) Inventor: OKADA, Toshihiko, Kariya-shi, Aichi 448-8652 (JP)
(74) Representative: Winter, Brandl - Partnerschaft mbB
(86) International application number: PCT/JP2023/032709
(87) International publication number: WO 2025/052632

(57) **Abstract**

**In** a turning control device (70), a steered wheel is a controlled object and a motor that turns the steered wheel is an operational object. The turning control device is configured to execute a right-turning operation process, a left-turning operation process, and a midpoint calculation process. The right-turning operation process is a process of maximally displacing the steered wheel to a right-turning side at a right-turning speed by operating the motor. The left-turning operation process is a process of maximally displacing the steered wheel to a left-turning side at a left-turning speed by operating the motor. The midpoint calculation process is a process of calculating a midpoint between a maximum value of a steered angle of the steered wheel on the right-turning side in the right-turning operation process and a maximum value of the steered angle on the left-turning side in the left-turning operation process. The right-turning operation process includes a process of changing the right-turning speed during the right-turning operation process.

## Description

### TECHNICAL FIELD

The present disclosure relates to a turning control device, a turning control system, and a turning control method.

### BACKGROUND ART

Patent Document 1 below describes a vehicle steering device that calculates a middle position of a steering wheel. This device controls a reaction motor to steer the steering wheel to the right, thereby acquiring a maximum rightward steering angle. This device controls the reaction motor to steer the steering wheel to the left, thereby acquiring a maximum leftward steering angle. In this device, the neutral position of the steering wheel is set to the midpoint between the maximum rightward steering angle and the maximum leftward steering angle.

### Related Art Documents

### Patent Documents

Patent Document 1: Japanese Unexamined Patent Application Publication No. 2023-22874 (JP 2023-22874 A)

### SUMMARY OF THE INVENTION

### Problem to be Solved by the Invention

There is a demand to reduce the period required for the process of calculating the midpoint.

### Means for Solving the Problem

In one aspect of the present disclosure, a turning control device is provided. In the turning control device, a steered wheel is a controlled object and a motor that turns the steered wheel is an operational object. The turning control device is configured to execute a right-turning operation process, a left-turning operation process, and a midpoint calculation process. The right-turning operation process is a process of maximally displacing the steered wheel to a right-turning side at a right-turning speed by operating the motor. The left-turning operation process is a process of maximally displacing the steered wheel to a left-turning side at a left-turning speed by operating the motor. The midpoint calculation process is a process of calculating a midpoint between a maximum value of a steered angle of the steered wheel on the right-turning side in the right-turning operation process and a maximum value of the steered angle on the left-turning side in the left-turning operation process. The right-turning operation process includes a process of changing the right-turning speed during the right-turning operation process. The left-turning operation process includes a process of changing the left-turning speed during the left-turning operation process.

In another aspect of the present disclosure, a turning control method is provided. In the turning control method, a steered wheel is a controlled object and a motor that turns the steered wheel is an operational object. The turning control method includes a step of executing a right-turning operation process, a left-turning operation process, and a midpoint calculation process. The right-turning operation process is a process of maximally displacing the steered wheel to a right-turning side at a right-turning speed by operating the motor. The left-turning operation process is a process of maximally displacing the steered wheel to a left-turning side at a left-turning speed by operating the motor. The midpoint calculation process is a process of calculating a midpoint between a maximum value of a steered angle of the steered wheel on the right-turning side in the right-turning operation process and a maximum value of the steered angle on the left-turning side in the left-turning operation process. The right-turning operation process includes a process of changing the right-turning speed during the right-turning operation process. The left-turning operation process includes a process of changing the left-turning speed during the left-turning operation process.

### BRIEF DESCRIPTION OF THE DRAWINGS

[FIG. 1] FIG. 1 is a block diagram showing a steering system according to an embodiment.
[FIG. 2] FIG. 2 is a flowchart showing procedures of a process that is executed by a turning control device shown in FIG. 1.
[FIG. 3] FIG. 3 is a flowchart showing procedures of a process that is executed by the turning control device shown in FIG. 1.
[FIG. 4] FIG. 4 is a block diagram showing a manufacturing process for the steering system in FIG. 1.
[FIG. 5] FIG. 5 is a flowchart showing procedures of a process that is executed by the turning control device shown in FIG. 4.
[FIG. 6] FIG. 6 is a flowchart showing procedures of a process that is executed by the turning control device shown in FIG. 4.
[FIG. 7] FIG. 7 is a diagram showing an example of control in the manufacturing process shown in FIG. 4.

### MODES FOR CARRYING OUT THE INVENTION

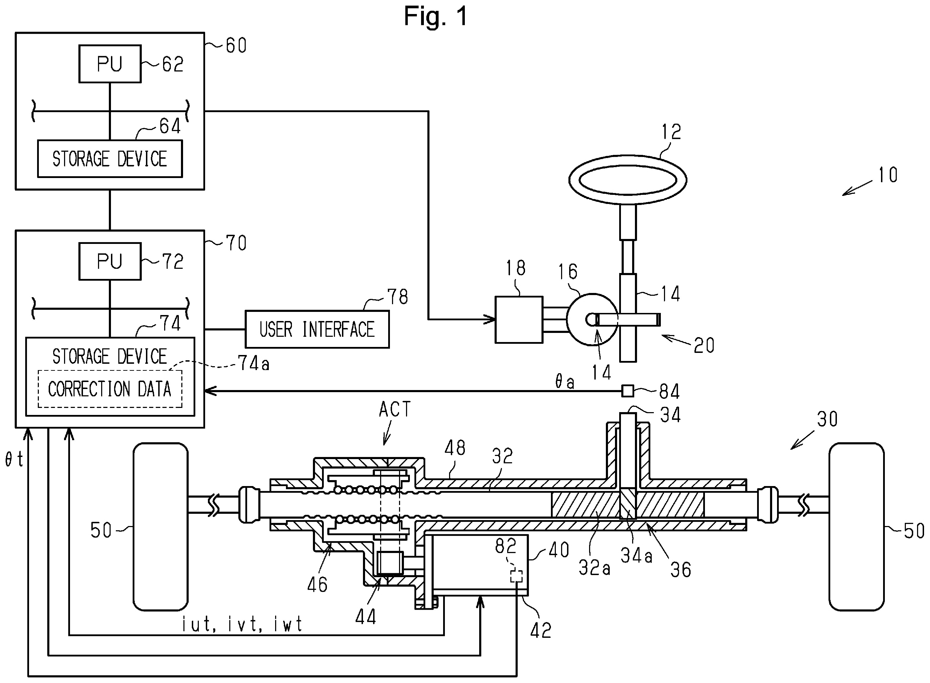

An embodiment will be described below with reference to the drawings. "Configuration of Steering System"
FIG. 1 shows the configuration of a steering system 10 of a vehicle. The steering system 10 includes a steering device 20, a turning device 30, a reaction force control device 60, and a turning control device 70.

The steering device 20 includes a steering wheel 12 and a steering shaft 14 mechanically connected to the steering wheel 12. A reaction motor 16 is mechanically connected to the steering shaft 14. The reaction motor 16 is used to apply a reaction force that counters the operation on the steering wheel 12 by a driver. An output voltage of an inverter 18 is applied to terminals of the reaction motor 16.

The turning device 30 includes a rack shaft 32 and a pinion shaft 34. The rack shaft 32 has rack teeth 32a. The pinion shaft 34 has pinion teeth 34a. The rack teeth 32a and the pinion teeth 34a are engaged with each other to form a rack and pinion mechanism 36.

The turning device 30 includes a turning actuator ACT. The turning actuator ACT includes a turning motor 40, an inverter 42, a transmission mechanism 44, and a conversion mechanism 46. The transmission mechanism 44 transmits rotation of the turning motor 40 to the conversion mechanism 46, for example, via a belt. The conversion mechanism 46 includes, for example, a ball screw mechanism. The conversion mechanism 46 converts rotational displacement from the transmission mechanism 44 into axial displacement of the rack shaft 32. The transmission mechanism 44 and the conversion mechanism 46 are conversion devices that convert rotational power of the turning motor 40 into axial displacement power of the rack shaft 32.

Steered wheels 50 are turned by the axial displacement of the rack shaft 32. The range of the axial displacement of the rack shaft 32 is determined by a rack housing 48. In other words, the maximum value of the steered angle of the steered wheels 50 on the right-turning side and the maximum value of the steered angle on the left-turning side are determined by the positions at which the displacement of the rack shaft 32 is prevented by the rack housing 48.

The reaction force control device 60 includes a PU 62 and a storage device 64. The controlled object for the reaction force control device 60 is the steering device 20 and the operational object is the reaction motor 16. The reaction force control device 60 controls the controlled variable of the controlled object by the PU 62 executing a program stored in the storage device 64.

The turning control device 70 includes a PU 72 and a storage device 74. The controlled object for the turning control device 70 is the steered wheels 50 and the operational object is the turning actuator ACT. The turning control device 70 controls the controlled variable of the controlled object by the PU 72 executing a program stored in the storage device 74. The turning control device 70 refers to a rotation angle of the turning motor 40 detected by a rotation angle sensor 82 to control the controlled variable. The turning control device 70 refers to an absolute angle θa detected by an absolute angle sensor 84 to control the controlled variable. The absolute angle θa is a rotation angle of the pinion shaft 34. The absolute angle θa is a variable having a one-to-one correspondence with the steered angle. For example, the absolute angle θa has a positive value in the case of the right-turning side, and a negative value in the case of the left-turning side. For example, when the maximum value of the steered angle on the right-turning side is larger than one rotation of the pinion shaft 34, the absolute angle θa may be an angle exceeding 360°. The turning control device 70 refers to currents iut, ivt, iwt flowing through the turning motor 40. The currents iut, ivt, iwt may be detected as voltage drops across shunt resistors provided in the legs of the inverter 42.

The reaction force control device 60 and the turning control device 70 can communicate with each other.

### "Processes of Turning Control Device"

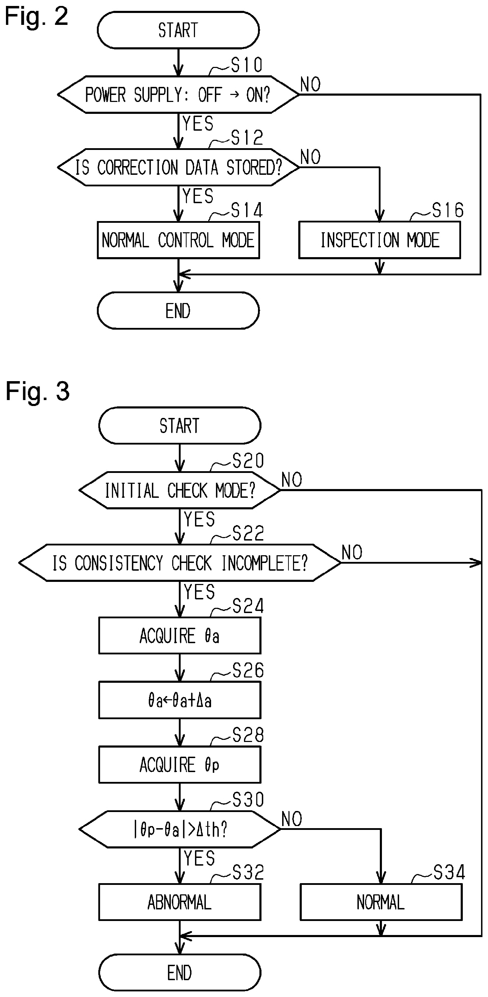

FIG. 2 shows procedures of a process that is executed when the turning control device 70 is activated. The process shown in FIG. 2 is implemented by the PU 72 repeatedly executing, for example, at predetermined intervals, a program stored in the storage device 74. In the following, step numbers for each process are represented by numbers preceded by "S."

In the series of processes shown in FIG. 2, the PU 72 first determines whether the power supply to the turning control device 70 has been switched from OFF to ON (S10). When the PU 72 determines that the power supply has been switched (S10: YES), the PU 72 determines whether correction data 74a is stored in the storage device 74 (S12). When the PU 72 determines that the correction data 74a is stored (S12: YES), the PU 72 sets the operation mode to a normal control mode (S14). The normal control mode is a mode for executing normal control in which the steered angle is the controlled variable. When the PU 72 determines that the correction data 74a is not stored (S12: NO), the PU 72 sets the operation mode to an inspection mode (S16). The inspection mode is a mode for executing a process of acquiring the correction data 74a.

The PU 72 temporarily terminates the series of processes shown in FIG. 2 when the process of S14 or S16 is completed or when negative determination is made in the process of S10. FIG. 3 shows procedures of a process that is executed by the turning control device 70. The process shown in FIG. 3 is implemented by the PU 72 repeatedly executing, for example, at predetermined intervals, a program stored in the storage device 74 in the normal control mode.

In the series of processes shown in FIG. 3, the PU 72 first determines whether the processing mode in the normal control mode is an initial check mode (S20). The initial check mode is a mode for executing a predetermined process when the turning control device 70 is activated. When the PU 72 determines that the processing mode is the initial check mode (S20: YES), the PU 72 determines whether a consistency check on information related to the steered angle acquired by the turning control device 70 has not been completed (S22). The consistency check is part of the above predetermined process. When the PU 72 determines that the consistency check has not been completed (S22: YES), the PU 72 acquires the latest absolute angle θa detected by the absolute angle sensor 84 (S24).

The PU 72 substitutes, for the absolute angle θa, a value obtained by adding a correction amount Δa to the acquired absolute angle θa (S26). The correction amount Δa is a value indicated by the correction data 74a stored in the storage device 74. Next, the PU 72 acquires an equivalent steered angle θp (S28). The equivalent steered angle θp is a variable having a one-to-one correspondence with the steered angle of the steered wheels 50. The equivalent steered angle θp is, for example, the rotation angle of the pinion shaft 34. The equivalent steered angle θp is calculated by the PU 72 based on a process of integrating a rotation angle θt. For example, the equivalent steered angle θp has a positive value in the case of the right-turning side, and a negative value in the case of the left-turning side. In the present embodiment, the resolution of the equivalent steered angle θp is higher than the resolution of the absolute angle θa. That is, the equivalent steered angle θp can express a steered angle that is smaller than the absolute angle θa.

The PU 72 determines whether the absolute value of a difference between the equivalent steered angle θp and the absolute angle θa is larger than a threshold value Δth (S30). The process of S30 is a process of evaluating the reliability of the equivalent steered angle θp to be used for controlling the steered angle. When the PU 72 determines that the absolute value of the difference is larger than the threshold value Δth (S30: YES), the PU 72 determines that there is an abnormality in the equivalent steered angle θp (S32). When the PU 72 determines that the absolute value of the difference is equal to or smaller than the threshold value Δth (S30: NO), the PU 72 determines that the equivalent steered angle θp is normal (S34).

The PU 72 temporarily terminates the series of processes shown in FIG. 3 when the process of S32 or S34 is completed or when negative determination is made in the process of S20 or S22. When determination is made in the above process that an abnormality is present, the PU 72 may notify the driver about the abnormality by operating a user interface 78 shown in FIG. 1. When determination is made in the predetermined process including the above process that no abnormality is present, the PU 72 executes the normal control in which the steered angle is the controlled variable. That is, the initial check mode is a mode for determining whether to make transition to the processing mode for executing the normal control in which the steered angle is the controlled variable. In the processing mode for executing the normal control in which the steered angle is the controlled variable, the controlled variable is the equivalent steered angle θp.

As described above, in the initial check mode, reference is made to the absolute angle θa corrected by the correction amount Δa. Therefore, the processing mode for executing the normal control in which the steered angle is the controlled variable is a process that uses the equivalent steered angle θp whose reliability is guaranteed by the absolute angle θa corrected by the correction amount Δa. In other words, the PU 72 refers to the correction amount Δa to execute the normal control in which the steered angle is the controlled variable.

### "Acquisition of Correction Data 74a"

The correction data 74a is stored in the storage device 74 before the turning device 30 is mounted on the vehicle.

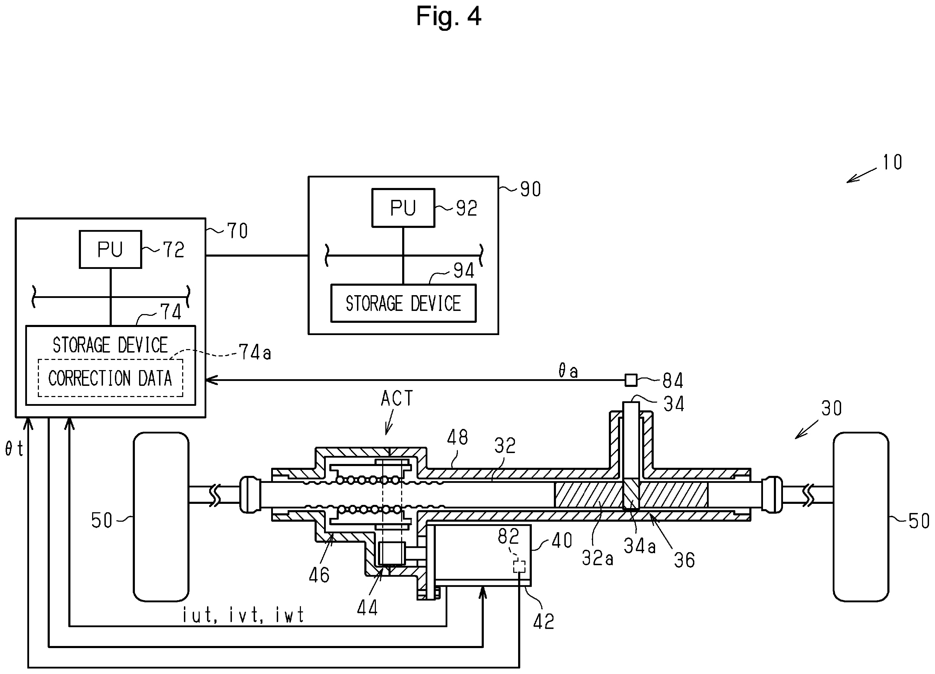

FIG. 4 shows a hardware configuration when the correction data 74a is acquired. As shown in FIG. 3, the turning control device 70 is connected to a facility-side terminal 90. The facility-side terminal 90 includes a PU 92 and a storage device 94. The facility-side terminal 90 causes the turning control device 70 to execute the process of acquiring the correction data 74a by the PU 92 executing a program stored in the storage device 94.

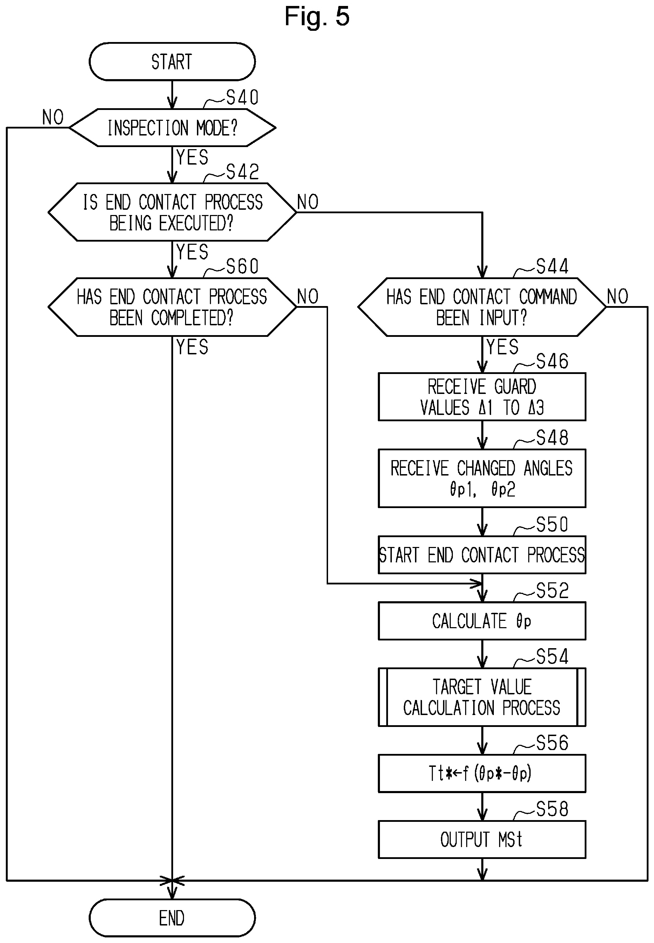

FIG. 5 shows procedures of a process for acquiring the correction data 74a. The process shown in FIG. 5 is implemented by the PU 72 repeatedly executing, for example, at predetermined intervals, a program stored in the storage device 74.

In the series of processes shown in FIG. 5, the PU 72 first determines whether the operation mode is the inspection mode (S40). When the PU 72 determines that the operation mode is the inspection mode (S40: YES), the PU 72 determines whether an end contact process is being executed (S42). When the PU 72 determines that the end contact process is not being executed (S42: NO), the PU 72 determines whether an end contact command has been input from the facility-side terminal 90 to the turning control device 70 (S44). When the PU 72 determines that the command has been input (S44: YES), the PU 72 receives data indicating guard values Δ1 to Δ3 output by the facility-side terminal 90 (S46). The PU 72 also receives changed angles θp1, θp2 output by the facility-side terminal 90 (S48). Then, the PU 72 starts the end contact process (S50).

Next, the PU 72 acquires the equivalent steered angle θp (S52). Then, the PU 72 calculates a target equivalent steered angle θp* that is a target value of the equivalent steered angle θp (S54). Next, the PU 72 calculates target torque Tt* according to an operation amount by feedback control in which the equivalent steered angle θp is the controlled variable and the target equivalent steered angle θp* is the target value of the controlled variable (S56). The target torque Tt* is torque of the turning motor 40.

Then, the PU 72 outputs, to the inverter 42, an operation signal MSt for the inverter 42 to bring the torque of the turning motor 40 closer to the target torque Tt* (S58). When the PU 72 determines that the end contact process is being executed (S42: YES), the PU 72 determines whether the end contact process has been completed (S60). When the PU 72 determines that the end contact process has not been completed (S60: NO), the PU 72 proceeds to the process of S52.

The PU 72 temporarily terminates the series of processes shown in FIG. 5 when the PU 72 determines that the end contact process has been completed (S60: YES), when negative determination is made in the process of S40 or S44, or when the process of S58 is completed.

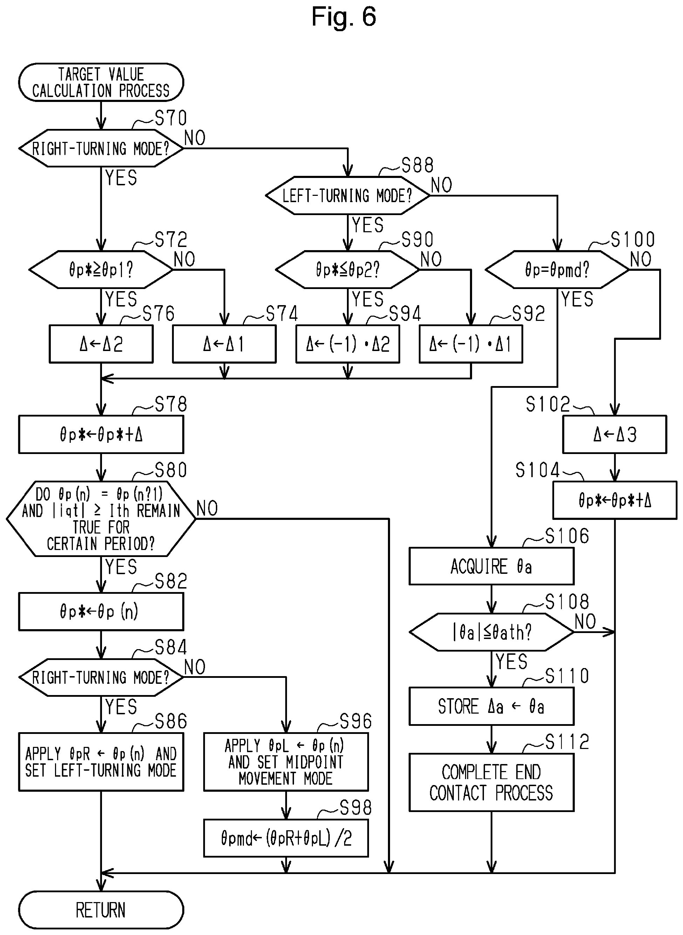

FIG. 6 shows details of the process of S54. In the series of processes shown in FIG. 6, the PU 72 determines whether the control mode for the steered wheels 50 in the end contact process is a right-turning mode (S70). The right-turning mode is a mode for executing a process of turning the steered wheels 50 to the right-turning side. For example, the PU 72 sets the right-turning mode at the start of the process of S70.

When the PU 72 determines that the mode is the right-turning mode (S70: YES), the PU 72 determines whether the target equivalent steered angle θp* is equal to or larger than the changed angle θp1 (S72). When the PU 72 determines that the target equivalent steered angle θp* is smaller than the changed angle θp1 (S72: NO), the PU 72 substitutes the guard value Δ1 for a change amount Δ (S74). The change amount Δ determines the amount of change in the target equivalent steered angle θp* per predetermined time. In other words, the change amount Δ determines the rate of change in the target equivalent steered angle θp*. When the PU 72 determines that the target equivalent steered angle θp* is equal to or larger than the changed angle θp1 (S72: YES), the PU 72 substitutes the guard value Δ2 for the change amount Δ (S76). The guard values Δ1, Δ2 are positive values, and the guard value Δ1 is set to a value larger than the guard value Δ2.

When the process of S74 or S76 is completed, the PU 72 substitutes, for the target equivalent steered angle θp*, a value obtained by adding the change amount Δ to the target equivalent steered angle θp* (S78). Then, the PU 72 determines whether the logical product of the following conditions (A) and (B) remains true for a certain period (S80).

The condition (A) is a condition that a previous value "θp(n-1)" and a current value "θp(n)" of the equivalent steered angle θp are equal to each other. The condition (B) is a condition that the absolute value of a q-axis current iqt flowing through the turning motor 40 is equal to or larger than a threshold value Ith. The threshold value Ith is set to a value larger than a value expected as the absolute value of the q-axis current iqt when the steered wheels 50 are turned in a case where the steered angle is in an intermediate region between an upper limit value on the right-turning side and an upper limit value on the left-turning side.

The above conditions (A) and (B) are conditions for determining whether the steered angle has reached the upper limit value on the right-turning side. When the PU 72 determines that the logical product of the conditions (A) and (B) remains true for the certain period (S80: YES), the PU 72 substitutes the current value "θp(n)" of the equivalent steered angle θp for the target equivalent steered angle θp* (S82). Then, the PU 72 determines whether the control mode is the right-turning mode (S84). When the PU 72 determines that the control mode is the right-turning mode (S84: YES), the PU 72 substitutes the current value "θp(n)" for a right-side upper limit value θpR, and sets the control mode to a left-turning mode (S86).

When the PU 72 determines that the control mode is not the right-turning mode (S70: NO), the PU 72 determines whether the control mode is the left-turning mode (S88). When the PU 72 determines that the control mode is the left-turning mode (S88: YES), the PU 72 determines whether the target equivalent steered angle θp* is equal to or smaller than the changed angle θp2 (S90). When the PU 72 determines that the target equivalent steered angle θp* is larger than the changed angle θp2 (S90: NO), the PU 72 substitutes "(-1)·Δ1" for the change amount Δ (S92). When the PU 72 determines that the target equivalent steered angle θp* is equal to or smaller than the changed angle θp2 (S90: YES), the PU 72 substitutes "(-1)·Δ2" for the change amount Δ (S94).

The PU 72 proceeds to the process of S78 also when the process of S92 or S94 is completed. The process of S80 that is executed in response to completion of the process of S92 or S94 is a process of determining whether the steered angle has reached the upper limit value on the left-turning side.

When negative determination is made in the process of S84, the PU 72 substitutes the current value "θp(n)" for a left-side upper limit value θpL, and sets the control mode to a midpoint movement mode (S96). Then, the PU 72 substitutes "1/2" of the sum of the right-side upper limit value θpR and the left-side upper limit value θpL for a midpoint θpmd (S98).

When negative determination is then made in the process of S88, the PU 72 determines whether the equivalent steered angle θp agrees with the midpoint θpmd (S100). When the PU 72 determines that the equivalent steered angle θp does not agree with the midpoint θpmd (S100: NO), the PU 72 substitutes the guard value Δ3 for the change amount Δ (S102). The guard value Δ3 is a positive value, and is set to a value larger than the guard value Δ2. The guard value Δ3 may be equal to the guard value Δ1. Then, the PU 72 substitutes, for the target equivalent steered angle θp*, a value obtained by adding the change amount Δ to the target equivalent steered angle θp* (S104).

When the PU 72 determines that the equivalent steered angle θp agrees with the midpoint θpmd (S100: YES), the PU 72 acquires the latest absolute angle θa detected by the absolute angle sensor 84 (S106). Then, the PU 72 determines whether the absolute value of the absolute angle θa is equal to or smaller than a threshold value θath (S108). The process of S108 is a process of determining whether the absolute angle θa has been acquired normally. That is, when affirmative determination is made in the process of S100, the absolute angle θa is considered to be close to zero. Therefore, when the absolute angle θa deviates significantly from zero, it is considered that some abnormality is present.

When the PU 72 determines that the absolute value is equal to or smaller than the threshold value θath (S108: YES), the PU 72 substitutes the absolute angle θa for the correction amount Δa, and then stores the correction amount Δa in the storage device 74 (S110). Thus, the storage device 74 makes transition from a state in which the correction data 74a that is data indicating the correction amount Δa is not stored to a state in which the correction data 74a is stored.

Then, the PU 72 completes the end contact process (S112). The PU 72 temporarily terminates the series of processes shown in FIG. 6 when the process of S86, S98, S104, or S112 is completed or when negative determination is made in the process of S80 or S108.

### <Functions and Effects of Embodiment>

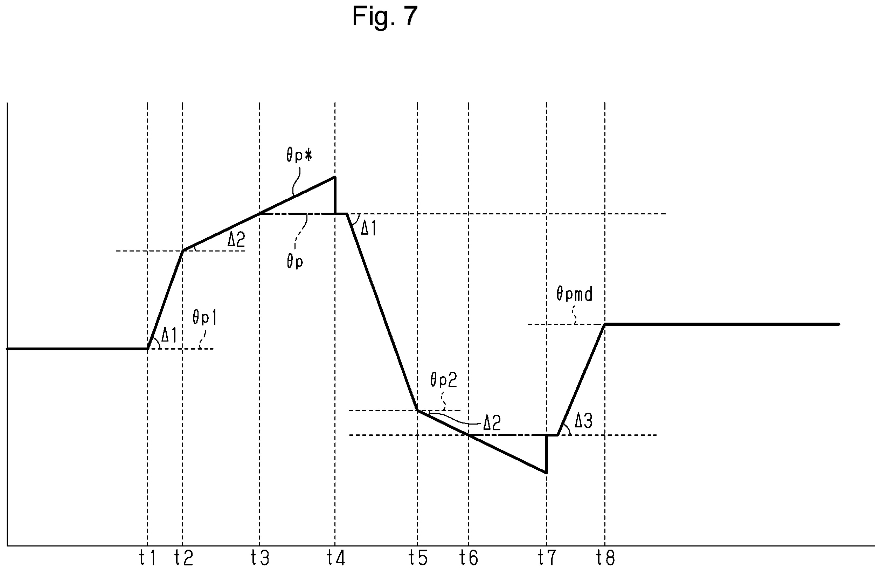

FIG. 7 illustrates the end contact process. As shown in FIG. 7, when the end contact command is input from the facility-side terminal 90 to the turning control device 70, the PU 72 increases the target equivalent steered angle θp* at a rate defined by the guard value Δ1 from time t1 onwards. Thus, the equivalent steered angle θp indicating the steered angle of the steered wheels 50 is controlled to follow the target equivalent steered angle θp*. At time t2 at which the target equivalent steered angle θp* reaches the changed angle θp1, the PU 72 changes the rate of change in the target equivalent steered angle θp* to a rate defined by the guard value Δ2. When the target equivalent steered angle θp* reaches the right-side upper limit value θpR at time t3, the equivalent steered angle θp does not increase any further. Therefore, at time t4, the PU 72 reduces the target equivalent steered angle θp* to the equivalent steered angle θp.

Then, the PU 72 reduces the target equivalent steered angle θp* at the rate defined by the guard value Δ1. When the target equivalent steered angle θp* reaches the changed angle θp2 at time t5, the PU 72 changes the rate of decrease in the target equivalent steered angle θp* to the rate defined by the guard value Δ2. When the equivalent steered angle θp reaches the left-side upper limit value θpL at time t6, the equivalent steered angle θp stops changing. Therefore, at time t7, the PU 72 increases the target equivalent steered angle θp* to the equivalent steered angle θp. Then, the PU 72 increases the target equivalent steered angle θp* at a rate defined by the guard value Δ3. When the equivalent steered angle θp reaches the midpoint θpmd, the PU 72 acquires the absolute angle θa. When the absolute value of the absolute angle θa is equal to or smaller than the threshold value θath, the PU 72 stores the absolute angle θa in the storage device 74 as the correction amount Δa.

In this way, the PU 72 changes the steered angle rate midway and causes the equivalent steered angle to reach the right-side upper limit value θpR and the left-side upper limit value θpL. Therefore, it is possible to appropriately achieve both the reduction in the period required for the process of obtaining the correction amount Δa and the suppression of an impact on the turning device 30. That is, in the case where the target equivalent steered angle θp* is changed by the PU 72 at the rate defined by the guard value Δ1, a large impact occurs when the equivalent steered angle θp reaches the right-side upper limit value θpR and the left-side upper limit value θpL. In the case where the target equivalent steered angle θp* is changed by the PU 72 at the rate defined by the guard value Δ2, the impact can be reduced when the equivalent steered angle θp reaches the right-side upper limit value θpR and the left-side upper limit value θpL. In this case, however, the period required for the process of obtaining the correction amount Δa increases.

The above embodiment further has the following functions and effects.
(1) The guard value Δ3 is set to a value larger than the guard value Δ2. Thus, it is possible to reduce the period required to reach the midpoint θpmd compared to a case where the guard value Δ2 is used in the midpoint movement mode.
(2) The present embodiment employs the system in which the guard values Δ1 to Δ3 are input from the facility-side terminal 90 to the turning control device 70. Thus, the right-turning speed etc. can be flexibly set to appropriate values in response to requirements such as the schedule of the manufacturing process for the turning device 30.
(3) The present embodiment employs the system in which the changed angles θp1, θp2 are input from the facility-side terminal 90 to the turning control device 70. Thus, the period required for the right-turning mode etc. can be flexibly set to appropriate values in response to requirements such as the schedule of the manufacturing process for the turning device 30.
(4) In the present embodiment, the equivalent steered angle θp according to the integration process for the rotation angle θt of the turning motor 40 is employed as the controlled variable of the feedback control in the midpoint movement mode. The equivalent steered angle θp has a higher resolution than the absolute angle θa. Therefore, the steered angle of the steered wheels 50 can be controlled to the midpoint with high accuracy.
(5) The PU 72 stores the absolute angle θa in the storage device 74 as the correction data 74a under the condition that the absolute value of the absolute angle θa when the equivalent steered angle θp reaches the midpoint θpmd is equal to or smaller than the threshold value θath. This suppresses storage of the absolute angle θa when the steered angle of the steered wheels 50 is not at the midpoint due to some abnormality.

### <Other Embodiments>

The present embodiment can be modified as follows. The present embodiment and the following modifications can be combined with each other as long as no technical contradictions arise.

### "Regarding Right-turning Operation Process"

- The number of times the right-turning speed is changed in the right-turning operation process need not be one, but may be two or more.
- The condition for the PU 72 to determine that the right-side upper limit value θpR has been reached is not limited to the condition that the logical product of the above conditions (A) and (B) remains true for the certain period. The condition for the PU 72 to determine that the right-side upper limit value θpR has been reached may be, for example, a condition that the above condition (A) is satisfied for a certain period. The condition for the PU 72 to determine that the right-side upper limit value θpR has been reached may be, for example, a condition that the above condition (B) is satisfied for a certain period.
- When the PU 72 determines that the right-side upper limit value θpR has been reached, the PU 72 need not execute the process of substituting the equivalent steered angle θp for the target equivalent steered angle θp*. For example, when the PU 72 determines that the right-side upper limit value θpR has been reached, the PU 72 may gradually reduce the target equivalent steered angle θp* according to the guard value Δ1.
- The controlled variable of the feedback control in the right-turning operation process need not be the equivalent steered angle θp. For example, the controlled variable of the feedback control in the right-turning operation process may be the rate of change in the equivalent steered angle θp. For example, the controlled variable of the feedback control in the right-turning operation process may be the absolute angle θa.

### "Regarding Left-turning Operation Process"

- The number of times the left-turning speed is changed in the left-turning operation process need not be one, but may be two or more.
- The condition for the PU 72 to determine that the left-side upper limit value θpL has been reached is not limited to the condition that the logical product of the above conditions (A) and (B) remains true for the certain period. The condition for the PU 72 to determine that the left-side upper limit value θpL has been reached may be, for example, a condition that the above condition (A) is satisfied for a certain period. The condition for the PU 72 to determine that the left-side upper limit value θpL has been reached may be, for example, a condition that the above condition (B) is satisfied for a certain period.
- When the PU 72 determines that the left-side upper limit value θpL has been reached, the PU 72 need not execute the process of substituting the equivalent steered angle θp for the target equivalent steered angle θp*. For example, when the PU 72 determines that the left-side upper limit value θpL has been reached, the PU 72 may gradually reduce the target equivalent steered angle θp* according to the guard value Δ1.
- The controlled variable of the feedback control in the left-turning operation process need not be the equivalent steered angle θp. For example, the controlled variable of the feedback control in the left-turning operation process may be the rate of change in the equivalent steered angle θp. For example, the controlled variable of the feedback control in the left-turning operation process may be the absolute angle θa.

### "Regarding Midpoint Calculation Process"

- In the midpoint calculation process, the process of S108 is not essential.
- For example, when the controlled variable of the feedback control in each of the right-turning operation process and the left-turning operation process is the absolute angle θa, the PU 72 may determine each of the right-side upper limit value θpR and the left-side upper limit value θpL as the value of the absolute angle θa. In this case, the PU 72 may store the midpoint θpmd that is "1/2" of the sum of the right-side upper limit value θpR and the left-side upper limit value θpL in the storage device 74 as the correction data 74a.

### "Regarding End Contact Process"

- The end contact process need not be executed before the turning device 30 is mounted on the vehicle. For example, the end contact process may be executed immediately after the turning device 30 is mounted on the vehicle. In this case, the end contact process can be executed in the same manner as in the above embodiment, for example, when the turning control device 70 is mounted on the vehicle and the turning control device 70 can communicate with the facility-side terminal 90.

### "Regarding Absolute Angle Sensor"

- The absolute angle sensor that detects an amount having a one-to-one correspondence with the steered angle of the steered wheels 50 is not limited to the sensor illustrated in the above embodiment. For example, a linear stroke sensor that directly detects an axial displacement amount of the rack shaft 32 may be used.
- The resolution of the absolute angle θa need not be lower than the resolution of the equivalent steered angle θp.

### "Regarding Reference Process"

- The reference process is not limited to the process shown in FIG. 3. For example, the PU 72 may substitute "θa + Δa" for the equivalent steered angle θp every time the power supply is switched from OFF to ON. Thus, the initial value of the equivalent steered angle θp at the time at which the power supply is switched from OFF to ON is set to "θa + Δa."

### "Regarding Turning Control Device"

- The guard values Δ1, Δ2, Δ3 need not be input to the turning control device 70 from the facility-side terminal 90. For example, the guard values Δ1, Δ2, Δ3 may be stored in advance in the storage device 74 of the turning control device 70.
- The changed angles θp1, θp2 need not be input to the turning control device 70 from the facility-side terminal 90. For example, the changed angles θp1, θp2 may be stored in advance in the storage device 74 of the turning control device 70.
- The turning control device is not limited to one that executes software processing. For example, the turning control device may include a dedicated hardware circuit, such as an ASIC, that executes at least part of the processes executed in the above embodiment by hardware processing. That is, the turning control device may include a processing circuit including any of the following configurations (a) to (c): (a) a processing circuit including a processing device that executes all of the above processes according to a program, and a program storage device such as a storage device that stores the program, (b) a processing circuit including a processing device that executes part of the above processes according to a program, a program storage device, and a dedicated hardware circuit that executes the remainder of the above processes, and (c) a processing circuit including a dedicated hardware circuit that executes all of the above processes. The number of software execution devices including a processing device and a program storage device may be two or more. The number of dedicated hardware circuits may be two or more.

### "Regarding Turning Control System"

- In a case where the facility-side terminal 90 does not input the guard values Δ1, Δ2, Δ3 and the changed angles θp1, θp2 to the turning control device 70, the facility-side terminal 90 may have only the function of outputting a command to execute the end contact process to the turning control device 70.

### "Regarding Turning Control Method"

- The computer mounted on the turning control device 70 need not execute all of the processes illustrated in FIGS. 2 to 6. For example, part of the processes may be executed by the computer of the facility-side terminal 90.

## Claims

1. A turning control device in which a steered wheel is a controlled object and a motor that turns the steered wheel is an operational object, the turning control device being configured to execute a right-turning operation process, a left-turning operation process, and a midpoint calculation process, wherein:
the right-turning operation process is a process of maximally displacing the steered wheel to a right-turning side at a right-turning speed by operating the motor;
the left-turning operation process is a process of maximally displacing the steered wheel to a left-turning side at a left-turning speed by operating the motor;
the midpoint calculation process is a process of calculating a midpoint between a maximum value of a steered angle of the steered wheel on the right-turning side in the right-turning operation process and a maximum value of the steered angle on the left-turning side in the left-turning operation process;
the right-turning operation process includes a process of changing the right-turning speed during the right-turning operation process; and
the left-turning operation process includes a process of changing the left-turning speed during the left-turning operation process.

2. The turning control device according to claim 1, wherein:
the right-turning speeds before and after changing and the left-turning speeds before and after changing are inputtable from an outside of the turning control device;
the right-turning operation process is a process that uses the right-turning speeds that have been input; and
the left-turning operation process is a process that uses the left-turning speeds that have been input.

3. The turning control device according to claim 1, wherein:
a value of a steered angle variable that changes the right-turning speed in the right-turning operation process and a value of a steered angle variable that changes the left-turning speed in the left-turning operation process are inputtable from an outside of the turning control device;
the right-turning operation process is a process that uses the value of the steered angle variable that has been input;
the left-turning operation process is a process that uses the value of the steered angle variable that has been input; and
the steered angle variables are variables each indicating the steered angle.

4. The turning control device according to claim 1, comprising a storage device, wherein:
the turning control device is configured to execute an equivalent steered angle calculation process, an absolute angle acquisition process, a midpoint movement process, a storage process, and a reference process;
the equivalent steered angle calculation process is a process of calculating an equivalent steered angle according to a detection value of a rotation angle of the motor;
the equivalent steered angle is a variable indicating the steered angle of the steered wheel;
the absolute angle acquisition process is a process of acquiring an absolute angle detected by an absolute angle sensor;
the absolute angle sensor is a sensor that detects an angle having a one-to-one correspondence with the steered angle;
the midpoint calculation process is a process in which the equivalent steered angle is an input and the midpoint is an output;
the midpoint movement process is a process of operating the motor to control the equivalent steered angle to the midpoint;
the storage process is a process of storing, in the storage device, the absolute angle acquired when the equivalent steered angle has reached the midpoint by the midpoint movement process; and
the reference process is a process of referring to the absolute angle stored in the storage device for a process of controlling the steered angle after a turning actuator including the motor is mounted on a vehicle.

5. The turning control device according to claim 4, wherein the storage process is a process of storing the absolute angle in the storage device under a condition that the absolute angle acquired when the equivalent steered angle has reached the midpoint by the midpoint movement process is within a predetermined range.

6. The turning control device according to claim 4, wherein the right-turning operation process, the left-turning operation process, the midpoint calculation process, and the storage process are processes that are executed before the turning actuator is mounted on the vehicle.

7. A turning control system comprising:
the turning control device according to claim 2; and
a facility-side device configured to communicate with the turning control device, wherein:
the facility-side device is configured to execute an input process; and
the input process is a process of inputting, to the turning control device, the right-turning speeds before and after changing and the left-turning speeds before and after changing.

8. A turning control method in which a steered wheel is a controlled object and a motor that turns the steered wheel is an operational object, the turning control method comprising a step of executing a right-turning operation process, a left-turning operation process, and a midpoint calculation process, wherein:
the right-turning operation process is a process of maximally displacing the steered wheel to a right-turning side at a right-turning speed by operating the motor;
the left-turning operation process is a process of maximally displacing the steered wheel to a left-turning side at a left-turning speed by operating the motor;
the midpoint calculation process is a process of calculating a midpoint between a maximum value of a steered angle of the steered wheel on the right-turning side in the right-turning operation process and a maximum value of the steered angle on the left-turning side in the left-turning operation process;
the right-turning operation process includes a process of changing the right-turning speed during the right-turning operation process; and
the left-turning operation process includes a process of changing the left-turning speed during the left-turning operation process.
